# EUROPEAN PATENT SPECIFICATION

(11) **EP 3 834 913 B1**
(45) Date of publication and mention of the grant of the patent: **28.02.2024**
(21) Application number: 20192513.8
(22) Date of filing: 02.11.2015
(51) Int. Cl.: B01D 53/14, B01D 53/18, B01D 53/78, B01D 47/02

(54) **MULTI-LEVEL GAS SCRUBBER WITH MULTIPLE FLOODED SCRUBBER HEADS**
MEHRSTUFIGER GASWÄSCHER MIT MEHREREN GEFLUTETEN WÄSCHERKÖPFEN
ÉPURATEUR DE GAZ À NIVEAUX MULTIPLES DOTÉ DE MULTIPLES TÊTES D'ÉPURATEUR NOYÉES

(30) Priority: 02.06.2015 US 201562169856 P
(43) Date of publication of application: 16.06.2021
(62) Divisional of application: 15893558.5
(73) Proprietor: Pacific Green Technologies Inc., San Jose CA 95129 (US)
(72) Inventor: McClelland, Kenneth James, West Vancouver, British Columbia V7V 3H5 (CA)
(74) Representative: Spengler, Robert

(56) References cited:
- WO-A1-2015/030352
- CN-A- 104 324 587
- US-A- 3 395 510
- US-A1- 2010 139 488
- US-A1- 2012 097 031

## Description

### FIELD OF INVENTION

The invention relates to the removal of air pollution emissions and particularly relates to an apparatus for scrubbing multiple contaminants from gases.

### BACKGROUND OF INVENTION

The air pollution emissions resulting from the combustion of coal, municipal solid waste and biomass, and air emissions from chemical and industrial processes have been increasingly restricted by governmental environmental agencies as a result of greater public demand for environmental protection coupled with advancements in pollution abatement technologies which allow more restrictive standards to be implemented. The restrictions vary by nation, region and proximity of the air pollution source to population centers. The regulations target a wide range of combustion by-products including particulate matter; acid gases such as sulphur dioxide, hydrogen chloride and hydrogen fluoride and metals such as mercury and metal groups known for their detrimental effects on human health. Many of the pollution abatement systems in use today by utilities and industrial processes have a history of development dating from the establishment of the first environmental regulations. These devices employ known chemical and mechanical processes to remove the regulated pollution components from gas streams. The stringent emission limits in force today and those more stringent limits pending implementation require alternative approaches. These alternative approaches include adding refinements to existing technologies to enhance their pollutant removal efficiency.

The emissions resulting from the combustion of diesel fuels in marine and power generation applications are also sources of regulated emissions. General cargo and container ships that carry the goods of international trade are burning bunker grade fuels that contain in the range of 2.5% to 2.7% sulphur. In addition, these marine diesel engines produce large amounts of ash, soot and unburned fuel that are emitted to the atmosphere on the world's oceans. The sulphur and particulate emissions are greater than permitted by the environmental regulations for land based operations. Regulations for these emissions in territorial waters as well as dockside are being implemented by regional and national environmental agencies and in international waters by the International Marine Organization. The options available to meet the demands of these regulation include adding scrubbing technologies or changing the fuel supply for ships to low sulphur fuels.

Emission technologies for the combustion processes noted above generally can be divided into wet and dry systems. Dry systems utilize different technologies to address the removal of acid gases and particulate. Dry flue gas desulphurization is commonly accomplished by devices such as a spray dryer tower. Common among the dry particulate systems are bag filters and electrostatic precipitators.

Wet systems used in conjunction with combustion flue gases commonly use aqueous based slurry containing an alkaline material such as limestone, lime, hydrated lime or enhanced lime as a neutralizing agent. Wet scrubbing systems employ several methods to create an interaction between the aqueous slurry and the contaminated flue gas. A simple approach uses sprayers in a spray tower or similar device to distribute the slurry into the flue gas to remove sulphur dioxide, hydrogen chloride and hydrogen fluoride through reaction with the slurry to form calcium based compounds. The interaction between the flue gas and the sprayed slurry is general in nature and is not as efficient or effective as forced wet scrubbing systems.

Forced wet scrubbing systems employ design approaches which force the flue gas into alkaline reagents contained in an aqueous slurry. The design of these systems creates a turbulent reaction zone that increases reaction time, and ensures complete interaction between the flue gas and alkaline slurry which improves acid gas removal efficiency. In addition, the turbulent zone creates an environment for the transfer of particulate matter from the flue gas to the scrubbing solution. These turbulent zones are generated by scrubbing heads containing ports submerged in a body of scrubbing fluid. The flue gas passes through the ports at high velocity which creates a turbulent zone in the scrubbing solution that transfers the particulate and provides a reaction zone for chemical interactions.

Thus, this form of wet system has the capacity to remove multiple pollutants in a single pass. It is however, limited to operating with a single interaction in the scrubbing fluid reservoir, typically located at the base of the scrubber. Its approach does not allow stacking the scrubbing heads so as to attain multiple scrubbing zones as the gas rises through the scrubber.

Document US 2012/0097031 A1 discloses a scrubber for removing contaminants from a gas stream, comprising a tank, a submerged head extending horizontally, wherein the submerged head comprises a plate having slots extending throughout, four solid joined vertical walls inset from the walls of the tank below the plate to form an open ended box under the plate, and openings along each edge of the plate between the walls of the tank and the vertical walls of the submerged head; a first baffle above the submerged head and means for spraying scrubbing fluid.

Document CN 104324587 A relates to gas-liquid mass transfer devices in the technical fields of chemical engineering and environmental protection. A thin-hole sieve-plate-typed bubble column comprises a cylinder body, a gas inlet, a gas outlet, a micro-channel thin-hole sieve plate, an imbibing breathable net and a downflow apparatus. A liquid phase is fed to the imbibing breathable net and is carried by a gas fed into the bubble column to form a gas-liquid mixture. The gas-liquid mixture passes through the micro-channel thin holes in the sieve plate to form a bubbling layer above a column plate. In the thin-hole sieve-plate-typed bubble column, the micro-channel thin-hole sieve plate and the imbibing breathable net are employed and a method of supplying the liquid from under the plate is employed so that the gas-liquid flow is formed and is passed through the micro channels, thereby significantly increasing a gas-liquid contacting area and enhancing a mass transfer process.

Document US 2010/0139488 A1 discloses an apparatus and process for removing acidic gases from flue gases produced by, for example, utility and industrial facilities. The acidic gases are removed as the flue gas flows upward through a contact zone within a passage, where the flue gas is contacted with an ammonium sulfate-containing scrubbing solution to absorb the acidic gases from the flue gas. The scrubbing solution and absorbed acidic gases therein are then accumulated, and ammonia and an oxygen-containing gas are injected into the accumulated scrubbing solution to react the absorbed acidic gases and produce ammonium sulfate. An acid solution is flowed across the passage above the contact zone of the passage, and the scrubbed flue gas is flowed upward through the acid solution to remove unreacted ammonia from the scrubbed flue gas. The acid solution is then removed from the passage after the acid solution has been contacted by the scrubbed flue gas.

Document WO 2015/030352 A1 discloses an exhaust gas desulfurization apparatus for a ship for performing desulfurization treatment on exhaust gas by using sea water. The apparatus comprises a body having a gas supply pipe for introducing the exhaust gas therein and a gas discharge pipe for discharging the exhaust gas; a swirling treatment unit for swirling the exhaust gas introduced into the body; a dissolution treatment unit for enabling the exhaust gas to pass through the sea water; a collection treatment unit having a filling material for collecting pollutants from the exhaust gas; a spray pipe for spraying and supplying the sea water to the swirling treatment unit, the dissolution treatment unit, and the collection treatment unit; and a discharge pipe for discharging the sea water to the swirling treatment unit, the dissolution treatment unit, and the collection treatment unit, and the sea water of the spray pipe is directly supplied from the sea water and the sea water of the discharge pipe is not reused.

Document US 3,395,510 discloses a gas scrubber comprising a closed vessel having an inlet opening to admit a particle-contaminated gas and an outlet opening to deliver scrubbed gas; and a plurality of serially arranged scrubbing stages, each stage comprising injection means disposed between the inlet and outlet openings for injecting steam into the gas, cooling means disposed between the injection means and the outlet opening for cooling the mixed gas and steam whereby the steam condenses in water droplets around the particles which serve as condensation nuclei, a first temperature sensor disposed between the inlet opening and the injection means, a second temperature sensor disposed between the injection means and the cooling means, a controller connected to the first and second temperature sensors, a valve connected to the controller for controlling the amount of steam reaching the injection means, and filter means disposed between the cooling means and the outlet opening for filtering the gas to remove the droplets and the particles entrained in the droplets.

The more restrictive emission limits being imposed on industry to control air pollutants from combustion, industrial and chemical processes require enhanced approaches in order to provide high efficiency and cost-effective abatement systems.

### SUMMARY OF INVENTION

It is a problem to provide a highly efficient and cost-effective scrubber apparatus and method for removing a plurality of distinct contaminants from a contaminated gas stream.

This problem is solved by the vertically-oriented scrubber apparatus having the features disclosed in claim 1, and by the method having the features disclosed in claim 6. Preferred embodiments are defined in the dependent claims.

The scrubber apparatus may have one or more additional flooded heads extending horizontally across the entire cross-section of the scrubber vessel and stacked vertically above the other heads, each defining an additional velum in relation to the head below; one or more additional scrubbing fluid reaction zone volumes, each disposed above a corresponding flooded head to a desired level, each additional scrubbing fluid selected to remove a desired additional group of contaminants from the contaminated gas stream; and one or more additional scrubbing fluid inlets extending through the wall into the corresponding additional velum above the corresponding additional flooded head, additional corresponding spraying means in fluid connection with the additional scrubbing fluid inlet for spraying the additional scrubbing fluid into the corresponding additional scrubbing fluid reaction zone volume, and one or more corresponding additional scrubbing fluid outlets above the corresponding flooded head passing through the wall of the scrubber vessel.

The gas inlet may be located at the top end of the vessel and a gas inlet duct conducts the gas to a position below the lowermost head; or at the side of the vessel and a gas inlet duct conducts the gas to a position below the lowermost head; or below the lowermost head of the vessel.

The apparatus may further comprise a mist eliminator consisting of an absorbent mesh extending across the scrubber vessel. Each of the spraying means may be one or more spray nozzles. The size of the slots in the flooded heads may be selected to prevent passage therethrough of scrubbing fluid in the presence of pressurized gas below the head.

There is further provided the use of such a scrubber apparatus remove multiple contaminants from a contaminated gas stream according to a method comprising the steps of introducing a first scrubbing fluid into the apparatus to a desired fluid level above the lowermost scrubber head; introducing a second scrubbing fluid into the apparatus to a desired level above the next highest scrubber head; cooling a contaminated process gas using a prior art gas conditioner; introducing the cooled contaminated gas under pressure from an induced draft fan into the apparatus at a position below the lowermost scrubber head; allowing the gas to pass upwardly through the lowermost scrubber head to transfer a first group of contaminants from the contaminated gas into the first scrubbing fluid in a first scrubbing fluid reaction zone volume above the lowermost scrubber head; allowing the gas to continue passing upwardly through the next highest scrubber head to transfer a second group of contaminants from the contaminated gas into the second scrubbing fluid in a second scrubbing fluid reaction zone volume above the next highest scrubber head; spraying the exiting gas to remove additional contaminants and slow the gas flow velocity; allowing the exiting gas to exit the scrubbing apparatus; separately removing first and second scrubbing fluids from the scrubber vessel to maintain a desired level of each scrubbing fluid; and cleaning drained scrubbing fluids for reuse in the scrubbing apparatus.

Another embodiment provides a scrubber apparatus for removing multiple contaminants from a contaminated gas stream, comprising a scrubber vessel having a series of vertically-stacked scrubber heads, each scrubber head flooded with a different scrubbing fluid, each scrubbing fluid selected to remove a desired group of contaminants from the contaminated gas stream, wherein the contaminated gas flows under pressure from below the lowermost scrubber head upwardly through the series of flooded scrubber heads.

The apparatus may be used to remove from a contaminated gas stream multiple contaminants selected from the group of contaminants comprising particulate matter, metals, hydrogen chloride, hydrogen fluoride, nitrous oxide, nitric oxide, carbon dioxide, and sulfur dioxide.

The present invention employs a proprietary flooded horizontal scrubbing head that occupies the entire scrubber cross section. The polluted gas passes from below to above the head through an array of ports cut into the head. Scrubbing fluid is supported above the head by the gas as the gas passes through ports at high velocity to create a turbulent reaction zone within the supported scrubbing fluid. The level of scrubbing fluid is controlled by overflow pipes or troughs and fluid is constantly added by distribution nozzles located above the turbulent zone. Further flooded horizontal heads can be added above the initial head at vertical intervals in the scrubber's cross-section. Using the flooded head approach, the present invention allows complete wet scrubbing at multiple levels, each level capable of operating with different neutralizing reagents. The capacity for multiple scrubbing zones provides the opportunity to improve overall removal efficiencies by adding polishing reaction zones for particulate and acid gas removal or by broadening the range of pollutants being removed by operating with a different neutralizing solution, or a combination of these operating conditions.

The present invention takes a novel approach to the creation of a turbulent scrubbing reaction zone at each of multiple levels with the capacity to use different neutralizing reagents at each level. Whereas traditional approaches use pressure differential across a scrubbing head to force gas through an array of ports submerged in a body of fluid, the present invention uses pressure differential to support the scrubbing fluid on top of a horizontal scrubbing head. The horizontal scrubbing head contains an array of ports through which the gas passes vertically upward into the flooded zone. The pressure differential and port design accelerates the gas sufficiently to create the desired highly turbulent reaction in the flooded zone above the head. The horizontal orientation of the scrubbing head allows multiple heads to be stacked within the same scrubber body. The flooded scrubber heads occupy the entire cross section of the scrubber body which devotes 100% of the scrubber's cross sectional area to scrubbing and the transit of gas. The horizontal orientation allows the scrubbing head to be any shape required by the space available for the scrubbing equipment. Because it has the capacity to remove multiple pollutants in a single pass the system has a smaller footprint than the accumulation of equipment that it replaces and as a single unit it is more cost-effective than multiple single purpose units. The flooded head can be incorporated into new scrubber designs or retrofitted into existing wet scrubbers using a submerged head design approach at its lowest level.

The flooded scrubbing head system is based upon a vertical orientation of the scrubber body and the horizontal orientation of the flooded scrubbing heads. The gas enters a plenum area above the scrubbing fluid reservoir in the base of the scrubber body and below the first flooded head. The gas is moved to the plenum by an induced draft fan capable of providing the volume required for the flue gas emission and pressure differential required to support the multiple reaction zones above the scrubbing head levels in the design. The pressure in the plenum is sufficient to force the gas through ports in the head and into a turbulent reaction zone above the head. The size, shape and plurality of the ports in the head are such that the gas is sufficiently accelerated to create the desired depth and vigor of turbulence above the head.

The fluid on each head is continuously circulated. The scrubbing fluid is pumped from a fluid reservoir to a network of fluid distribution nozzles that deliver scrubbing fluid to the area above each head. Return to the reservoir is provided by fluid level controls such as overflow troughs or standpipes that pipe the fluid back to the reservoir. The condition of the returning fluid is monitored for control factors such as pH and the reservoir is conditioned with additional neutralizing reagents to return the fluid to its optimum reaction condition before redistribution above the head. In addition, the fluid may be processed by solids removal devices such as hydrocyclones to remove particulate matter collected by the scrubbing fluid.

As the gas continues to rise in the flooded head scrubber it encounters additional flooded scrubbing heads with the same configuration of ports, fluid distribution and overflows to fluid reservoirs. In cases where different scrubbing fluids are employed, the overflows direct the alternative scrubbing Upon exiting the turbulent zone of the final head the gas rises through demisters or similar devices to remove free water from the gas. The gas is available to be ducted to the stack or further processes if required.

The flooded head system can also be used in conjunction with submerged scrubbing heads at the base level of the scrubber. After exiting the turbulent zone above the submerged scrubbing head the gas rises under pressure to a flooded head(s) that operate in the full cross section of the scrubber in the same manner as described above.

### BRIEF DESCRIPTION OF DRAWINGS

A detailed description of the preferred embodiment is provided below by way of example only and with reference to the following drawings in which:
Figure 1A is a top view of a schematic drawing of one embodiment of the flooded scrubber head of the present invention;
Figure IB is a lateral cross-sectional view through 1B-1B of the flooded scrubber head depicted in Fig. 1A;
Figure 1C is a blow-up schematic view of one corner of the embodiment of a flooded scrubber head shown in Fig. 1A;
Figure 2 is a cross-sectional view of a multiple level scrubber having the flooded scrubber head of the present invention at each scrubbing level; and
Figure 3 is a schematic of an embodiment of a system (not according to the invention) where initial scrubbing is performed by a submerged scrubbing head and the flooded scrubber head is used for scrubbing on subsequent levels above the initial head.

### DETAILED DESCRIPTION OF THE INVENTION

The present invention provides a means of creating multiple wet scrubbing interaction levels 2, 4 within a single scrubber vessel 11, each level of which is capable of scrubbing 100% of the gas flow with a different scrubbing fluid. The present invention uses a scrubber head design whose horizontal orientation and flooded operating characteristics allow the stacking of multiple heads within a single wet scrubber body. The ability to incorporate additional scrubbing interaction zones in a single system provides the opportunity to increase overall removal efficiency for pollutants such as particulate matter, acid gases or metals by adding polishing steps or to remove additional regulated pollutants by utilizing other neutralizing reagents. By incorporating the flooded scrubber heads of the present invention in wet scrubber designs the resulting system will have lower capital costs, a smaller footprint and higher efficiency removal of multiple pollutants.

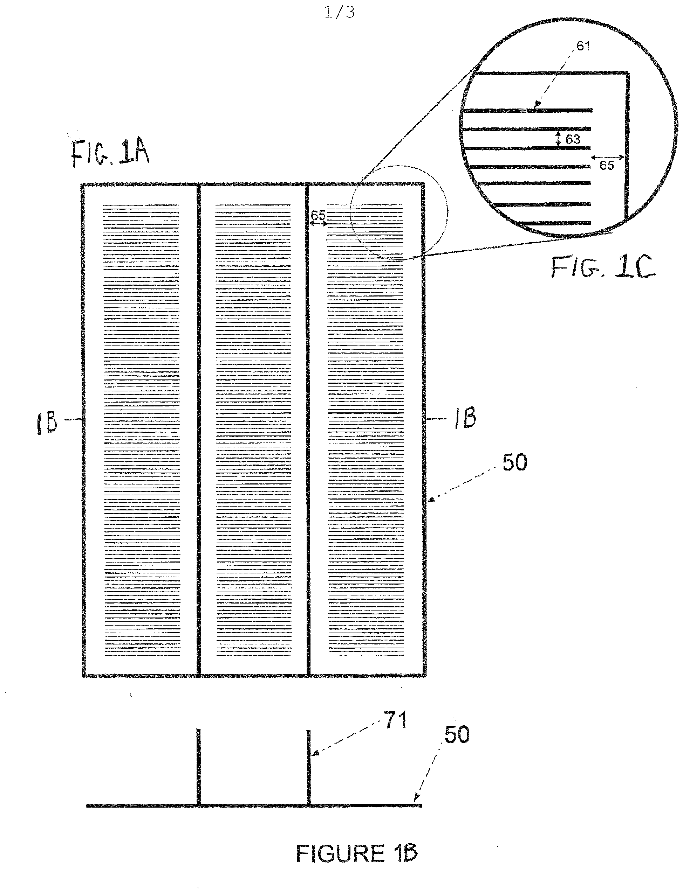

Referring to Figures 1A to 1C, the scrubbing head 50 is shown as a generic form to demonstrate the elements of the head. The head 50 operates in a horizontal orientation. The head may be manufactured from any sheet or plate material with sufficient strength, stiffness, and thermal and chemical resistance properties. Typical materials are metal plate with the preferred materials being stainless steel. The horizontal cross-sectional shape of the head conforms to the shape of the scrubber body so as to allow a sealed fit between the periphery of the scrubber head and the inner circumference of the scrubber vessel. The head contains a plurality of ports 61 that may be in any shape, number and orientation to the head. The preferred port shape is a slot with length in the range of 125 to 200mm with a preferred width of 2mm. The spacing 63 of the ports is typically in the range of 20 to 25mm. The margins 65 between the ports and the edge of the head are uniform with a preferred distance of 40mm. The head may contain accelerator plates 71 oriented at right angles to the head. The accelerator plates equally divide the space between the rows of ports 61. The margin 65 between the accelerator plates and the ports 61 is maintained at a preferred distance of 40mm. The accelerator plates are typically 150mm in height and contain scuppers at the head deck level to allow the lateral transfer of scrubbing fluid. The accelerator plate is of the same material as the scrubber head. Other parameters for the ports, margins, and accelerator plates are permitted within the scope of the invention.

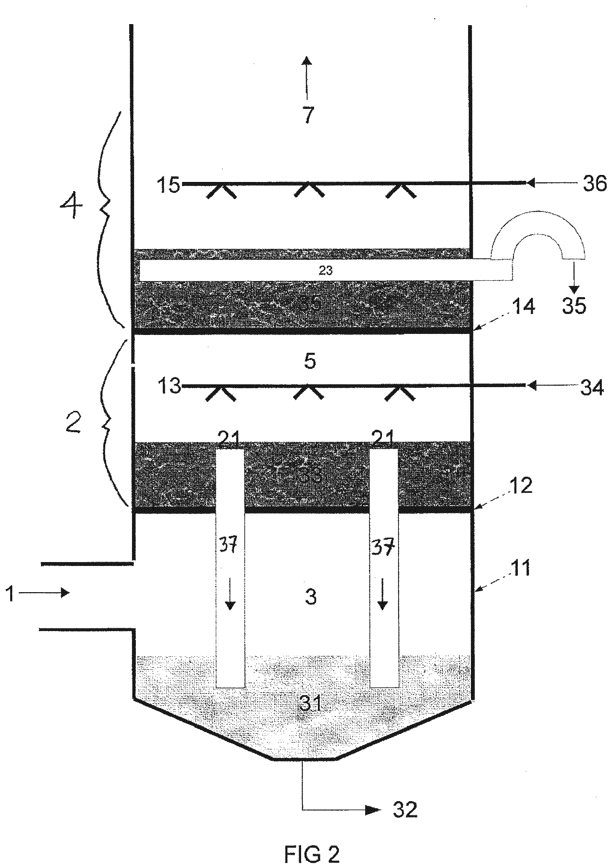

Referring to Figure 2, there is depicted an example of a scrubber system incorporating the flooded scrubber heads of the present invention which is comprised of a scrubbing vessel (11) containing two flooded heads 12, 14.

The process of gas contamination removal using the system of Figure 2 begins with introduction of the contaminated gas 1 from a combustion or industrial process that generates particulate matter, acid gases and metals that require removal. The gas enters a lowermost plenum 3 bounded by a reservoir of a first scrubbing fluid 31 (or a solid membrane) below and a flooded head 12 above. The gas enters under positive pressure created by an induced draft fan (not shown). The gas pressure is sufficient to support a desired depth of a first scrubbing fluid on the heads 12, 14 and to overcome the pressure drop incurred by the gas as it passes through the ports in the heads. Preferred pressure at the lowermost plenum 3 is 450mm of water. The gas rises through the ports in the lowermost head 12 at a velocity in the range of 20 to 25 meters per second. The gas enters a turbulent first scrubbing fluid reaction zone volume 33 where the gas and first scrubbing fluid are aggressively mixed. The first scrubbing fluid is selected for it reactivity with a first group of contaminants targeted for removal. The first scrubbing fluid level on the lowermost head 12 is controlled by overflow tubes that pass through the head to the first scrubbing fluid reservoir 31 that is typically located in the base of the scrubber vessel 11. The overflow first scrubbing fluid 37 is replaced by conditioned first scrubbing fluid 34 from a first scrubbing fluid inlet distribution header 13 in order to maintain fluid level and reactivity with the contaminants being removed. In addition to chemical reactivity, the aggressive turbulence created in the wet scrubber will efficiently remove particulate matter from the gas and transfer it to the scrubbing fluid. After exiting the turbulent first scrubbing fluid reaction zone volume the gas rises under the remaining pressure to repeat the process, passing through a second flooded head 14 into a turbulent second scrubbing fluid reaction zone volume 35. For illustrative purposes the depth of the second scrubbing fluid reaction zone volume 35 is controlled by a second scrubbing fluid outlet, which may be a plurality of overflow troughs 23 that transfer the second scrubbing fluid from the scrubber vessel and route it to a second scrubbing fluid reservoir not shown. Using this approach, the second scrubbing fluid on head 14 can be a different scrubbing fluid than that on head 12, thus allowing polishing or alternative contaminants to be removed. Second scrubbing fluid on head 14 is constantly replaced with conditioned scrubbing fluid 36. The decontaminated gas 7 exiting the second scrubbing fluid reaction zone volume 35 can be ducted to the stack or further processes. Using this same approach, additional flooded scrubbing heads may be serially added vertically within the scrubber body for further polishing or removal of other air pollutants as required by the process.

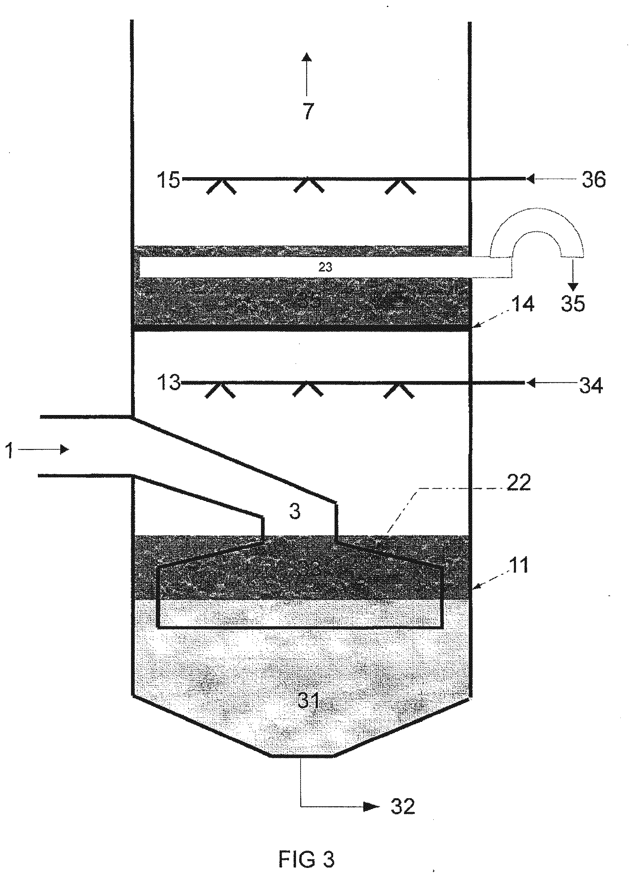

Referring to Figure 3, there is shown an example of a system comprising a scrubbing vessel 11 containing a submerged lowermost head 22 beneath a flooded head 14 functioning as a second scrubbing head.

The process in Figure 3 begins with the contaminated gas 1 from a combustion or industrial process that generates particulate matter, acid gases and metals that require removal. The gas is ducted to the submerged scrubber head 22. The gas enters under positive pressure created by an induced draft fan (not shown). The gas pressure is sufficient to overcome the pressure created by the depth of a first scrubbing fluid on the lowermost head 22 and support the depth of a second scrubbing fluid to be supported on the second flooded head 14. Additional gas pressure is incorporated into the design to overcome the pressure drop incurred by the gas as it passes through the ports in the heads and losses incurred in the ducting of the gas. Preferred pressure at the lowermost plenum 3 is 450mm of water. The gas rises through the ports in the submerged head 22 at a velocity determined by the design of the head. The gas enters a turbulent first scrubbing fluid reaction zone volume 33 where the gas and first scrubbing fluid are aggressively mixed in a turbulent first scrubbing fluid reaction zone volume. The first scrubbing fluid is selected for its reactivity with a first group of contaminants targeted for removal. The first scrubbing fluid level on the submerged head 22 is controlled by sensors such as differential pressure sensors which activate control valves to regulate the flow of fluid exiting for recirculation via a first scrubbing fluid outlet 32 in the floor of the vessel. Conditioned first scrubbing fluid 34 is added through a first scrubbing fluid inlet distribution header 13 in order to maintain reactivity with the contaminants being removed. In addition to chemical reactivity, the aggressive turbulence created in the wet scrubber will efficiently remove particulate matter from the gas and transfer it to the scrubbing fluid. After exiting the turbulent first scrubbing fluid reaction zone volume 33 the gas rises under the remaining pressure to repeat the process, passing through flooded head 14 into a turbulent second scrubbing fluid reaction zone volume 35. For illustrative purposes the depth of the second scrubbing fluid reaction zone volume 35 is controlled by a second scrubbing fluid outlet, which may be a plurality of overflow troughs 23 that transfer the second scrubbing fluid from the scrubber vessel and route it to a second scrubbing fluid reservoir (not shown). Using this approach, the upper flooded head 14 can operate with a different scrubbing fluid than is used on the submerged head 22 thus allowing polishing or the addition of alternative reagents to remove other regulated contaminants. Second scrubbing fluid on the flooded head 14 is constantly replaced with conditioned second scrubbing fluid 36 carried by second scrubbing fluid inlet distribution header 15. The decontaminated gas 7 exiting the second scrubbing fluid reaction zone volume can be ducted to the stack or further processes. Using this same approach, additional flooded scrubbing heads may be serially added vertically within the scrubber vessel for further polishing or removal of other air pollutants as required by the process.

One or more flooded scrubbing heads as embodied in the present invention offer advantages over the current art represented by submerged scrubbing heads. Among the advantages is the ability to supply wet scrubbing of 100% of the gas at multiple levels of interaction zones with different neutralizing reagents within a single scrubbing body. This attribute allows a single scrubbing device to remove a broader range of pollutants at higher removal efficiencies. Scrubbers utilizing the flooded head design will have a smaller and highly flexible footprint, lower capital cost, scalability and capacity to remove multiple pollutants in a single device. The flooded head has application in combustion processes including coal, biomass and municipal solid waste where the primary pollutants targeted for removal are particulate matter, acid gases including sulphur dioxide, hydrogen chloride and hydrogen fluoride, metals including mercury. In addition, scrubbers used in chemical and industrial processes requiring the removal of dust, odors and acid gases are candidates for flooded head designs in both new and retrofit installations.

From the foregoing, it will be seen that this invention is one well adapted to attain all of the ends and objectives herein set forth, together with other advantages which are obvious and which are inherent to the system. It will be understood that certain features and sub-combinations are of utility and may be employed with reference to other features and sub-combinations. This is contemplated by and is within the scope of the claims. Many possible embodiments may be made of the invention without departing from the scope of the claims. It is to be understood that all matter herein set forth and shown in the accompanying drawings is to be interpreted as illustrative and not in a limiting sense. It will be appreciated by those skilled in the art that other variations of the preferred embodiment may also be practiced without departing from the scope of the invention.

## Claims

1. A vertically-oriented scrubber apparatus for removing a plurality of distinct contaminants from a contaminated gas stream, comprising:
a) a scrubber vessel (11) having a ceiling, a floor, a cylindrical wall connecting the ceiling to the floor, a plurality of vertically-spaced heads (12, 14), a volume above each head (2, 4), a gas inlet (22), an induced draft fan, and a gas outlet;
b) a first scrubbing fluid reservoir (31) disposed within the bottom end of the scrubber vessel (11) to a desired level, the first scrubbing fluid (34) selected to remove a first group of contaminants from the contaminated gas stream;
c) a first flooded head (12) extending horizontally across the scrubber vessel (11) at a position above the gas inlet, defining a first volume (3) between the first scrubbing fluid reservoir (31) and the first flooded head (12), wherein the first flooded head (12) comprises a plate (50) having a plurality of narrow slots (61) extending throughout;
d) a first scrubbing fluid reaction zone volume (33) disposed to a desired level above the first flooded head (12), the reaction zone volume (33) in fluid connection with the reservoir (31) via one or more overflow tubes (21), each extending from the first scrubbing fluid reservoir (31) through the first flooded head (12) to a desired level above the first flooded head (12);
f) a first scrubbing fluid inlet extending through the wall into a second volume (5) above the first flooded head (13), first spraying means (13) in fluid connection with the first scrubbing fluid inlet for spraying the first scrubbing fluid (34) into the first scrubbing fluid reaction zone volume (33), and a first scrubbing fluid outlet (32) in the floor;
g) a second flooded head (14) extending horizontally across the entire cross-section of the scrubber vessel (11) at a position above the first flooded head (12), defining a second volume (5) between the first scrubbing fluid reaction zone volume (33) and the second flooded head (14), wherein the second flooded head (14) comprises a plate (50) having a plurality of narrow slots (61) extending throughout;
h) a second scrubbing fluid reaction zone volume (35) disposed above the second flooded head (14) to a desired level, the second scrubbing fluid (36) selected to remove a second group of contaminants from the contaminated gas stream; and
i) a second scrubbing fluid inlet extending into a third volume above the second flooded head (14), second spraying means (15) in fluid connection with the second scrubbing fluid inlet for spraying the second scrubbing fluid (36) into the second scrubbing fluid reaction zone volume, and a second scrubbing fluid outlet (35) above the second flooded head (14) passing through the wall of the scrubber vessel.

2. The scrubber apparatus of claim 1, further comprising:
a) one or more additional flooded heads extending horizontally across the entire cross-section of the scrubber vessel (11) and serially stacked vertically above the other heads, each defining an additional volume in relation to the head below;
b) one or more additional scrubbing fluid reaction zone volumes, each disposed above a corresponding flooded head to a desired level, each additional scrubbing fluid selected to remove a desired additional group of contaminants from the contaminated gas stream; and
c) one or more additional scrubbing fluid inlets extending through the wall into the corresponding additional volume above the corresponding additional flooded head, additional corresponding spraying means in fluid connection with the additional scrubbing fluid inlet for spraying the additional scrubbing fluid into the corresponding additional scrubbing fluid reaction zone volume, and one or more corresponding additional scrubbing fluid outlets above the corresponding flooded head passing through the wall of the scrubber vessel (11).

3. The scrubber apparatus of claim 1, wherein the gas inlet is fed by a gas inlet duct which conducts the gas from an intake at the top end of the vessel (11) to the gas inlet.

4. The scrubber apparatus of claim 1, wherein a gas inlet duct is located at the side of the vessel and conducts the gas to the gas inlet at a position below the lowermost head.

5. The scrubber apparatus of claim 1, wherein the size of the slots (61) in the flooded heads (12, 14) are selected to prevent passage therethrough of scrubbing fluid in the presence of pressurized gas below the flooded heads (12, 14).

6. A method of removing multiple contaminants from a contaminated gas stream, the method comprising the steps of:
a) introducing a first scrubbing fluid (34) into the apparatus of claim 1 to a desired fluid level above the first flooded scrubber head (12);
b) introducing a second scrubbing fluid (36) into the apparatus of claim 1 to a desired level above the second flooded scrubber head (14);
c) cooling a contaminated process gas (1) using a prior art gas conditioner;
d) introducing the cooled contaminated gas (1) under pressure from an induced draft fan into the apparatus of claim 1 at a position below the first flooded scrubber head (12);
e) allowing the gas (1) to pass upwardly through the first flooded head (12) to transfer a first group of contaminants from the contaminated gas (1) into the first scrubbing fluid (34) in a first scrubbing fluid reaction zone volume (33) above the first flooded head (12);
f) allowing the gas (1) to continue passing upwardly through the second flooded head (14) to transfer a second group of contaminants from the contaminated gas (1) into the second scrubbing fluid (36) in a second scrubbing fluid reaction zone volume (35) above the second flooded head (14);
g) spraying the exiting gas (7) to remove additional contaminants and slow the gas flow velocity;
h) allowing the exiting gas (7) to exit the scrubbing apparatus;
i) separately removing first and second scrubbing fluids (34, 36) from the scrubber vessel (11) to maintain a desired level of each scrubbing fluid (34, 36); and
j) cleaning drained scrubbing fluids (34, 36) for reuse in the scrubbing apparatus.

7. The method of claim 6, further comprising the additional step (ff) after step (f) of:
ff) allowing the gas (1) to continue passing upwardly through one or more serially vertically stacked additional flooded heads to transfer one or more additional groups of contaminants from the contaminated gas (1) into one or more additional scrubbing fluids in each of one or more additional scrubbing fluid reaction zone volumes above each of the corresponding flooded heads.

## Patentansprüche

1. Vertikal ausgerichtete Wäschervorrichtung zum Entfernen einer Vielzahl von verschiedenen Kontaminanten aus einem kontaminierten Gasstrom, umfassend:
a) einen Wäscherbehälter (11), der eine Decke, einen Boden, eine zylindrische Wand, die die Decke mit dem Boden verbindet, eine Vielzahl von vertikal beabstandeten Köpfen (12, 14), ein Volumen über jedem Kopf (2, 4), einen Gaseinlass (22), einen Saugzuglüfter und einen Gasauslass aufweist;
b) einen ersten Waschfluidspeicher (31), der innerhalb des unteren Endes des Wäscherbehälters (11) bis zu einer gewünschten Höhe angeordnet ist, wobei das erste Waschfluid (34) ausgewählt ist, um eine erste Gruppe von Kontaminanten aus dem kontaminierten Gasstrom zu entfernen;
c) einen ersten gefluteten Kopf (12), der sich horizontal durch den Wäscherbehälter (11) an einer Position oberhalb des Gaseinlasses erstreckt und ein erstes Volumen (3) zwischen dem ersten Waschfluidspeicher (31) und dem ersten gefluteten Kopf (12) definiert,
wobei der erste geflutete Kopf (12) eine Platte (50) umfasst, die eine Vielzahl von schmalen Schlitzen (61) aufweist, die sich durchgehend erstrecken;
d) ein erstes Waschfluid-Reaktionsbereichvolumen (33), das auf einer gewünschten Höhe oberhalb des ersten gefluteten Kopfs (12) angeordnet ist, wobei das Reaktionsbereichvolumen (33) über ein oder mehrere Überlaufrohre (21), die sich jeweils von dem ersten Waschfluidspeicher (31) durch den ersten gefluteten Kopf (12) bis auf eine gewünschte Höhe oberhalb des ersten gefluteten Kopfs (12) erstrecken, in Fluidverbindung mit dem Speicher (31) ist;
f) einen ersten Waschfluideinlass, der sich durch die Wand in ein zweites Volumen (5) oberhalb des ersten gefluteten Kopfs (13) erstreckt, erste Sprüheinrichtungen (13) in Fluidverbindung mit dem ersten Waschfluideinlass zum Sprühen des ersten Waschfluids (34) in das erste Waschfluid-Reaktionsbereichvolumen (33) und einen ersten Waschfluidauslass (32) in dem Boden;
g) einen zweiten gefluteten Kopf (14), der sich horizontal durch den gesamten Querschnitt des Wäscherbehälters (11) an einer Position oberhalb des ersten gefluteten Kopfs (12) erstreckt und ein zweites Volumen (5) zwischen dem ersten Waschfluid-Reaktionsbereichvolumen (33) und dem zweiten gefluteten Kopf (14) definiert, wobei der zweite geflutete Kopf (14) eine Platte (50) umfasst, die eine Vielzahl von schmalen Schlitzen (61) aufweist, die sich durchgehend erstrecken;
h) ein zweites Waschfluid-Reaktionsbereichvolumen (35), das oberhalb des zweiten gefluteten Kopfs (14) bis auf eine gewünschte Höhe angeordnet ist, wobei das zweite Waschfluid (36) ausgewählt ist, um eine zweite Gruppe von Kontaminanten aus dem kontaminierten Gasstrom zu entfernen; und
i) einen zweiten Waschfluideinlass, der sich in ein drittes Volumen oberhalb des zweiten gefluteten Kopfs (14) erstreckt, zweite Sprüheinrichtungen (15) in Fluidverbindung mit dem zweiten Waschfluideinlass, um das zweite Waschfluid (36) in das zweite Waschfluid-Reaktionsbereichvolumen zu sprühen, und einen zweiten Waschfluidauslass (35) oberhalb des zweiten gefluteten Kopfs (14), der durch die Wand des Wäscherbehälters verläuft.

2. Wäschervorrichtung nach Anspruch 1, ferner umfassend:
a) einen oder mehrere zusätzliche geflutete Köpfe, die sich horizontal durch den gesamten Querschnitt des Wäscherbehälters (11) erstrecken und vertikal in Reihe über den anderen Köpfen gestapelt sind, wobei jeder Kopf ein zusätzliches Volumen in Bezug auf den Kopf darunter definiert;
b) ein oder mehrere zusätzliche Waschfluid-Reaktionsbereichvolumina, die jeweils oberhalb eines entsprechenden gefluteten Kopfs bis auf eine gewünschte Höhe angeordnet sind, wobei jedes zusätzliche Waschfluid ausgewählt ist, um eine gewünschte zusätzliche Gruppe von Kontaminanten aus dem kontaminierten Gasstrom zu entfernen; und
c) einen oder mehrere zusätzliche Waschfluideinlässe, die sich durch die Wand in das entsprechende zusätzliche Volumen oberhalb des entsprechenden zusätzlichen gefluteten Kopfs erstrecken, zusätzliche entsprechende Sprüheinrichtungen in Fluidverbindung mit dem zusätzlichen Waschfluideinlass, um das zusätzliche Waschfluid in das entsprechende zusätzliche Waschfluid-Reaktionsbereichvolumen zu sprühen, und einen oder mehrere entsprechende zusätzliche Waschfluidauslässe oberhalb des entsprechenden gefluteten Kopfs, die durch die Wand des Wäscherbehälters (11) verlaufen.

3. Wäschervorrichtung nach Anspruch 1, wobei der Gaseinlass durch eine Gaseinlassleitung gespeist wird, die das Gas von einem Einlass an dem oberen Ende des Behälters (11) zu dem Gaseinlass leitet.

4. Wäschervorrichtung nach Anspruch 1, wobei sich ein Gaseinlasskanal auf der Seite des Behälters befindet und das Gas zu dem Gaseinlass an einer Position unterhalb des untersten Kopfs leitet.

5. Wäschervorrichtung nach Anspruch 1, wobei die Größe der Schlitze (61) in den gefluteten Köpfen (12, 14) gewählt ist, um einen Durchgang von Waschfluid bei Vorhandensein von unter Druck stehendem Gas unterhalb der gefluteten Köpfe (12, 14) zu verhindern.

6. Verfahren zum Entfernen mehrerer Kontaminanten aus einem kontaminierten Gasstrom, das Verfahren umfassend die folgenden Schritte:
a) Einleiten eines ersten Waschfluids (34) in die Vorrichtung nach Anspruch 1 bis auf eine gewünschte Fluidhöhe oberhalb des ersten gefluteten Wäscherkopfs (12);
b) Einleiten eines zweiten Waschfluids (36) in die Vorrichtung nach Anspruch 1 bis auf eine gewünschte Höhe oberhalb des ersten gefluteten Wäscherkopfs (14);
c) Abkühlen eines kontaminierten Prozessgases (1) unter Verwendung einer Gasaufbereitungsanlage des Stands der Technik;
d) Einleiten des abgekühlten kontaminierten Gases (1) unter Druck aus einem Saugzuglüfter in die Vorrichtung nach Anspruch 1 an einer Position unterhalb des ersten gefluteten Wäscherkopfs (12);
e) Ermöglichen, dass das Gas (1) nach oben durch den ersten gefluteten Kopf (12) verläuft, um eine erste Gruppe von Kontaminanten aus dem kontaminierten Gas (1) in das erste Waschfluid (34) in einem ersten Waschfluid-Reaktionsbereichvolumen (33) oberhalb des ersten gefluteten Kopfs (12) zu übertragen;
f) Ermöglichen, dass das Gas (1) weiter nach oben durch den zweiten gefluteten Kopf (14) verläuft, um eine zweite Gruppe von Kontaminanten aus dem kontaminierten Gas (1) in das zweite Waschfluid (36) in einem zweiten Waschfluid-Reaktionsbereichvolumen (35) oberhalb des zweiten gefluteten Kopfs (14) zu übertragen;
g) Sprühen des austretenden Gases (7), um zusätzliche Kontaminanten zu entfernen und die Gasströmungsgeschwindigkeit zu verringern;
h) Ermöglichen, dass das austretende Gas (7) aus der Waschvorrichtung austritt;
i) separates Entfernen des ersten und des zweiten Waschfluids (34, 36) aus dem Wäscherbehälter (11), um eine gewünschte Höhe von jedem Waschfluid (34, 36) aufrechtzuerhalten; und
j) Reinigen der abgelassenen Waschfluide (34, 36) zur Wiederverwendung in der Waschvorrichtung.

7. Verfahren nach Anspruch 6, ferner umfassend den folgenden zusätzlichen Schritt (ff) nach Schritt (f):
ff) Ermöglichen, dass das Gas (1) weiter nach oben durch einen oder mehrere in Reihe vertikal gestapelte zusätzliche Flutköpfe verläuft, um eine oder mehrere zusätzliche Gruppen von Kontaminanten aus dem kontaminierten Gas (1) in ein oder mehrere zusätzliche Waschfluide in jedem von einem oder mehreren zusätzlichen Waschfluid-Reaktionsbereichvolumen über jedem der entsprechenden Flutköpfe zu übertragen.

## Revendications

1. Appareil épurateur orienté verticalement pour retirer une pluralité de contaminants distincts d'un flux de gaz contaminé, comprenant :
a) une cuve d'épurateur (11) ayant un plafond, un plancher, une paroi cylindrique raccordant le plafond au plancher, une pluralité de têtes (12, 14) verticalement espacées, un volume au-dessus de chaque tête (2, 4), une entrée de gaz (22), un ventilateur à tirage induit, et une sortie de gaz ;
b) un premier réservoir de fluide d'épuration (31) disposé dans l'extrémité inférieure de la cuve d'épurateur (11) à un niveau souhaité, le premier fluide d'épuration (34) étant sélectionné pour retirer un premier groupe de contaminants du flux de gaz contaminé ;
c) une première tête noyée (12) s'étendant horizontalement sur la cuve d'épurateur (11) dans une position au-dessus de l'entrée de gaz, définissant un premier volume (3) entre le premier réservoir de fluide d'épuration (31) et la première tête noyée (12), dans lequel la première tête noyée (12) comprend une plaque (50) ayant une pluralité de fentes étroites (61) s'étendant à travers cette dernière ;
d) un premier volume de zone de réaction de fluide d'épuration (33) disposé à un niveau souhaité au-dessus de la première tête noyée (12), le volume de zone de réaction (33) étant en raccordement de fluide avec le réservoir (31) via un ou plusieurs tubes de trop-plein (21), chacun s'étendant à partir du premier réservoir de fluide d'épuration (31) en passant par la première tête noyée (12) jusqu'à un niveau souhaité au-dessus de la première tête noyée (12) ;
f) une première entrée de fluide d'épuration s'étendant à travers la paroi dans un deuxième volume (5) au-dessus de la première tête noyée (13), des premiers moyens de vaporisation (13) en raccordement de fluide avec la première entrée de fluide d'épuration pour pulvériser le premier fluide d'épuration (34) dans le premier volume de zone de réaction de fluide d'épuration (33), et une première sortie de fluide d'épuration (32) dans le plancher ;
g) une seconde tête noyée (14) s'étendant horizontalement sur toute la section transversale de la cuve d'épurateur (11) dans une position au-dessus de la première tête noyée (12), définissant un deuxième volume (5) entre le premier volume de zone de réaction de fluide d'épuration (33) et la seconde tête noyée (14), dans lequel la seconde tête noyée (14) comprend une plaque (50) ayant une pluralité de fentes étroites (61) s'étendant à travers cette dernière ;
h) un deuxième volume de zone de réaction de fluide d'épuration (35) disposé au-dessus de la seconde tête noyée (14) jusqu'à un niveau souhaité, le second fluide d'épuration (36) étant sélectionné pour retirer un second groupe de contaminants du flux de gaz contaminé ; et
i) une seconde entrée de fluide d'épuration s'étendant dans un troisième volume au-dessus de la seconde tête noyée (14), des seconds moyens de pulvérisation (15) en raccordement de fluide avec la seconde entrée de fluide d'épuration pour pulvériser le second fluide d'épuration (36) dans le deuxième volume de zone de réaction de fluide d'épuration, et une seconde sortie de fluide d'épuration (35) au-dessus de la seconde tête noyée (14) passant par la paroi de la cuve d'épurateur.

2. Appareil épurateur selon la revendication 1, comprenant en outre :
a) une ou plusieurs têtes noyées supplémentaires s'étendant horizontalement sur toute la section transversale de la cuve d'épurateur (11) et empilées en série verticalement au-dessus des autres têtes, définissant chacune un volume supplémentaire par rapport à la tête du dessous ;
b) un ou plusieurs volumes de zone de réaction de fluide d'épuration supplémentaires, chacun disposé au-dessus d'une tête noyée correspondante à un niveau souhaité, chaque fluide d'épuration supplémentaire étant sélectionné pour retirer un groupe supplémentaire souhaité de contaminants du flux de gaz contaminé ; et
c) une ou plusieurs entrées de fluide d'épuration supplémentaires s'étendant à travers la paroi dans le volume supplémentaire correspondant au-dessus de la tête noyée supplémentaire correspondante, des moyens de pulvérisation correspondants supplémentaires en raccordement de fluide avec l'entrée de fluide d'épuration supplémentaire pour pulvériser le fluide d'épuration supplémentaire dans le volume de zone de réaction de fluide d'épuration supplémentaire correspondant, et une ou plusieurs sorties de fluide d'épuration supplémentaires correspondantes au-dessus de la tête noyée correspondante passant à travers la paroi de la cuve d'épurateur (11).

3. Appareil épurateur selon la revendication 1, dans lequel l'entrée de gaz est alimentée par un conduit d'entrée de gaz qui conduit le gaz à partir d'une admission au niveau de l'extrémité supérieure de la cuve (11) jusqu'à l'entrée de gaz.

4. Appareil épurateur selon la revendication 1, dans lequel un conduit d'entrée de gaz est positionné du côté de la cuve et conduit le gaz vers l'entrée de gaz dans une position au-dessous de la tête la plus basse.

5. Appareil épurateur selon la revendication 1, dans lequel la taille des fentes (61) dans les têtes noyées (12, 14) est sélectionnée pour empêcher le passage à travers ces dernières du fluide d'épuration en présence du gaz sous pression au-dessous des têtes noyées (12, 14).

6. Procédé pour retirer une pluralité de contaminants d'un flux de gaz contaminé, le procédé comprenant les étapes consistant à :
a) introduire un premier fluide d'épuration (34) dans l'appareil selon la revendication 1, à un niveau de fluide souhaité au-dessus de la première tête d'épurateur noyée (12) ;
b) introduire un second fluide d'épuration (36) dans l'appareil selon la revendication 1, à un niveau souhaité au-dessus de la seconde tête d'épurateur noyée (14) ;
c) refroidir un gaz de traitement (1) contaminé à l'aide d'un conditionneur de gaz de l'art antérieur ;
d) introduire le gaz contaminé (1) refroidi sous pression d'un ventilateur à tirage induit dans l'appareil selon la revendication 1 dans une position au-dessous de la première tête d'épurateur noyée (12) ;
e) permettre au gaz (1) de traverser de bas en haut à travers la première tête noyée (12) pour transférer un premier groupe de contaminants du gaz contaminé (1) dans le premier fluide d'épuration (34) dans un premier volume de zone de réaction de fluide d'épuration (33) au-dessus de la première tête noyée (12) ;
f) permettre au gaz (1) de continuer à traverser de bas en haut à travers la seconde tête noyée (14) pour transférer un second groupe de contaminants du gaz contaminé (1) dans le second fluide d'épuration (36) dans un deuxième volume de zone de réaction de fluide d'épuration (35) au-dessus de la seconde tête noyée (14) ;
g) pulvériser le gaz sortant (7) pour retirer les contaminants supplémentaires et ralentir la vitesse d'écoulement du gaz ;
h) permettre au gaz sortant (7) de sortir de l'appareil d'épuration ;
i) retirer séparément les premier et second fluides d'épuration (34, 36) de la cuve d'épurateur (11) afin de maintenir un niveau souhaité de chaque fluide d'épuration (34, 36) ; et
j) nettoyer les fluides d'épuration (34, 36) drainés pour être réutilisés dans l'appareil d'épuration.

7. Procédé selon la revendication 6, comprenant en outre l'étape supplémentaire (ff) après l'étape (f) consistant à :
ff) permettre au gaz (1) de continuer à traverser de bas en haut à travers une ou plusieurs têtes noyées supplémentaires empilées verticalement en série afin de transférer un ou plusieurs groupes supplémentaires de contaminants du gaz contaminé (1) dans les un ou plusieurs fluides d'épuration supplémentaires dans chacun des un ou plusieurs volumes de zone de réaction de fluide d'épuration supplémentaires au-dessus de chacune des têtes noyées correspondantes.
